# EUROPEAN PATENT APPLICATION

(11) **EP 1 531 534 A2**
(43) Date of publication of application: **18.05.2005**
(21) Application number: 04026170.3
(22) Date of filing: 04.11.2004
(51) Int. Cl.: H02J 7/00

(54) **Charging and feeding control method and device**

(30) Priority: 12.11.2003 JP 2003382277
(71) Applicant: NEC CORPORATION, Tokyo (JP)
(72) Inventor: Ishida, Takeshi, Kamikawamachi Kodama-gun Saitama (JP)
(74) Representative: Glawe. Delfs. Moll

(57) **Abstract**

A charging and feeding device is disclosed, which attempts to lower a thermal loss of a current control circuit, by changing a setting of the current flowing in the current control circuit according to the load state of a load device. Monitoring circuit monitors the present load state of the load device. Current control circuit controls a current value supplied from a direct current power supplied through the current control circuit based on the present load state data acquired by the monitoring circuit.

## Description

### BACKGROUND OF THE INVENTION

### 1. Field of the Invention:

The present invention relates to a charging and feeding control method and a charging and feeding device.

### 2. Description of the Related Art:

An electric apparatus in which a battery and a loading device are connected to an external direct current power supply through a current control circuit has been conventionally known. As one of such electric apparatuses, there is a mobile telephone.

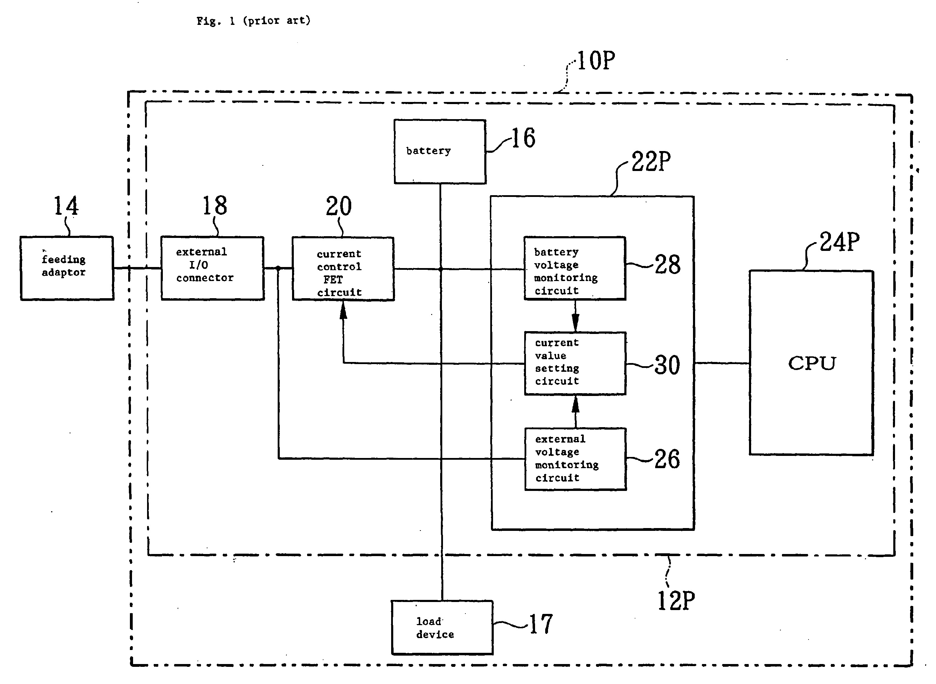

A schematic diagram of a charging and feeding device in the mobile telephone is shown in FIG. 1. In FIG. 1, reference character 10P denotes a mobile telephone, and two terminals of charging and feeding device 12P of this mobile telephone 10P are connected to feeding adaptor 14, and moreover, charging and feeding device 12P is connected also between the terminals of load device 17. Load device 17 is a speaking circuit, a TV display device and the like of mobile telephone 10P. The two terminals of charging and feeding device 12P are connected between the terminals of battery 16 within charging and feeding device 12P.

Charging and feeding device 12P consists of external I/O connector 18, current control field effect transistor circuit (hereinafter referred to as current control FET circuit) 20, feeding control IC circuit 22P and CPU 24P.

External I/O connector 18 feeds current control FET circuit 20 from feeding adaptor 14.

Current control FET circuit 20 controls a charging voltage and a charging current under the control of feeding control IC circuit 22P.

Feeding control IC circuit 22P controls an entire charging control, and consists of external voltage monitoring circuit 26, battery voltage monitoring circuit 28, and current value setting circuit 30.

External voltage monitoring circuit 26 is connected to a connecting point between the output terminal of external I/O connector 18 and the input terminal of current control FET circuit 20, and monitors a voltage fed from the outside and detects an excess voltage. Battery voltage monitoring circuit 28 monitors the voltage of battery 16. Current value setting circuit 30 controls current control FET circuit 20 based on the monitoring result outputted from external voltage monitoring circuit 26 and battery voltage monitoring circuit 28.

CPU 24P monitors the charging operation by feeding control IC circuit 22P, and moreover, monitors the speaking operation and the standby operation of mobile telephone 10P.

The charging control of charging and feeding device 12P of the conventional mobile telephone 10P thus constituted as described above will be described as follows.

When current control FET circuit 20 is fed from feeding adaptor 14, the feeding is detected by external voltage monitoring circuit 26, and the detected result is supplied to current value setting circuit 30. Current value setting circuit 30 performs a variable resistance control of the FET of current control FET circuit 20 according to the detected result, for example, the duty control of on/off of the FET which operates as a switch, thereby charging battery 16.

In parallel with this charging, battery voltage monitoring circuit 28 monitors the voltage of battery 16, and current value setting circuit 30 gives the charging control, according to this monitoring result, to current control FET circuit 20.

For example, battery voltage monitoring circuit 28, when detecting that the voltage of battery 16 becomes less than 4.2 volt, informs current value setting circuit 30 to that effect. Current value setting circuit 30 controls current control FET circuit 20 so as to perform a quick charge of 600 mA.

When voltage of the battery 16 is restored to 4.2 volt by this quick charge, after that, battery voltage monitoring circuit 28 informs current value setting circuit 30 of that restoration, and current value setting circuit 30 changes the charging control of current control FET circuit 20 to a constant voltage charging control of 4.2 volt.

Further, according to Japanese Patent Laid-Open No. 2000-156939, when the ambient temperature of the CPU of a notebook PC exceeds a preset monitoring temperature, the CPU is periodically interrupted, and the interrupted CPU informs a charging control controller to that effect. The charging control controller, when fully charged, refers to a charging value table, and sets the least charging current as an actual charging current from among the charging current corresponding to the present entire consumption current value, the charging current corresponding to the battery temperature and the charging current corresponding to the CPU temperature.

Further, Japanese Patent Laid-Open No. 2003-158829 discloses a secondary battery charging control circuit in which an AC adaptor is constructed by being connected to a secondary battery through a power transistor. According to the description thereof, in case an AC adaptor of a tranformer type is used for the AC adaptor, to solve a technical problem such as the consumption power of the a power transistor being increased for a preset time from the point of time when a constant current charging control mode changes to a constant voltage charging control mode, an adaptor voltage detector is provided so that, when the adaptor voltage becomes equal to or greater than the set voltage by this adaptor voltage detector, a constant current charging reference voltage set in a constant current control circuit of the secondary battery charging control circuit is lowered so as to reduce the charging current, thereby controlling the increase of the consumption power of the power transistor.

However, the above described conventional technology has the following problems.

In the above described built-in charging and feeding device mobile telephone and the like, when the charging amount of the battery 16 is decreased or the load device becomes a large load, the voltage of the battery 16 is lowered, and the rapid charging is performed.

Even when the voltage fed from feeding adaptor 14 is a voltage in the range where an excess voltage is not detected by external voltage monitoring circuit 26, in case the above described rapid charging is performed, since the voltage of battery 16 is sharply lowered, a potential difference between the input and output of current control FET circuit 20 becomes large so that a thermal loss at current control FET circuit 20 is rapidly increased.

Consequently, current control FET circuit 20 generates heat. As a result, the temperature of the mobile telephone and the like rise so as to cause inconveniences in using the mobile telephone and the like. In particular, since the mobile telephone is used being applied to ears and kept close to the face, there is not only caused discomfort in use, but also a risk of incurring a low temperature heat injury.

As means for avoiding such a heat generation of the charging control FET circuit, the reducing of the charging current during the charging is also performed.

There is also a technological problem that, when the charging current is decreased lower than the consumption current of the mobile telephone and the like, the current outflows from battery 16 as a part of the consumption current, and the voltage of battery 16 is gradually lowered, and it ends up becoming lower than the voltage by which the mobile telephone and the like normally operate.

Further, though the technology disclosed in Japanese Patent Laid-Open No. 2003-158829 attempts to solve the technological problem such as reduction of the power consumption of the power transistor, according to this technology, there arises a problem in that an adaptor voltage has to be directly detected, which makes it indispensable to have technological means therefor.

Further, since the technology disclosed in Japanese Patent Laid-Open No. 2000-156939 has to directly measure the ambient temperature of the CPU, the battery temperature and the entire consumption current in order to control the temperature rise of the CPU, it has the same problem as that of the technology disclosed in Japanese Patent Laid-Open No. 2003-158829.

### SUMMARY OF THE INVENTION

An object of the present invention is to provide a charging and feeding control method and a charging and feeding device, which attempt to lower a thermal loss of a current control circuit based on the load state of a load device.

To achieve the above described object, the present invention is a charging and feeding control method for feeding the load device while charging the battery also from a direct current power supply through a current control circuit, and is characterized in that it monitors the present load state of the load device, and based on the acquired present load state data, controls the current value provided from the direction current power supply through the current control circuit.

The above and other objects, features, and advantages of the present invention will become apparent from the following description with references to the accompanying drawings which illustrate examples of the present invention.

### BRIEF DESCRIPTION OF THE DRAWINGS

FIG. 1 is a block diagram of a charging and feeding device of a conventional mobile telephone;
FIG. 2 is a block diagram of the charging and feeding device which is a first embodiment of this invention;
FIG. 3 is a current value setting table used in the charging and feeding device;
FIG. 4 is a flowchart showing a processing procedure at a CPU of the charging and feeding device;
FIG. 5 is a block diagram of the charging and feeding device which is a second embodiment of this invention;
FIG. 6 is the current value setting table used in the charging and feeding device;
FIG. 7 is a block diagram of the charging and feeding device which is a third embodiment of this invention;
FIG. 8 is a block diagram of the charging and feeding device which is a fourth embodiment of this invention;
FIG. 9 is a flowchart showing the processing procedure at the CPU of the charging and feeding device;
FIG. 10 is a block diagram of the charging and feeding device which is a fifth embodiment of this invention; and
FIG. 11 is a block diagram of the charging and feeding device which is a sixth embodiment of this invention.

### DETAILED DESCRIPTION OF THE PREFERRED EMBODIMENTS:

According to embodiments of this invention, the present load state of the load device is monitored by a charging and feeding device, which is connected between an external direct current power supply and a load device operating in a plurality of load states and has a battery and a current control circuit, and a current value to be set for a current control circuit based on the present load state is acquired, and the current of the current control circuit is set to the above described current value.

### (First Embodiment)

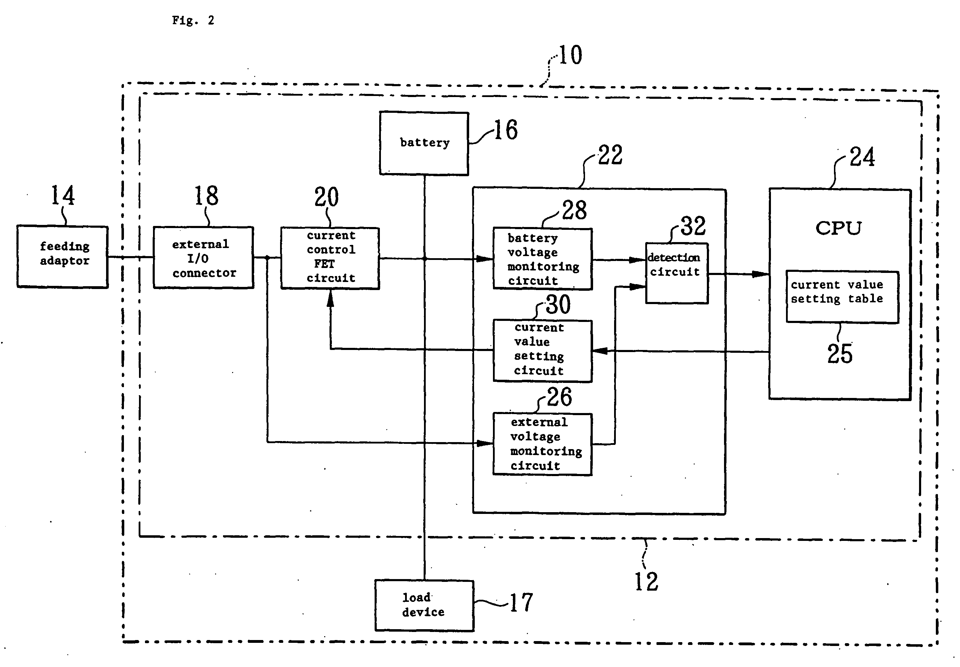

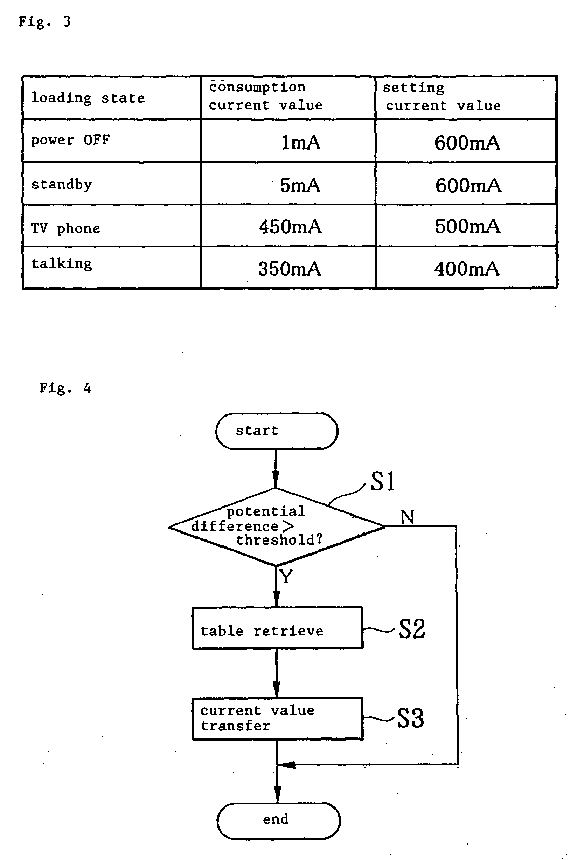

FIG. 2 is a schematic block diagram of the charging and feeding device which is a first embodiment of this invention. FIG. 3 is a current value setting table used in the charging and feeding device. Further, FIG. 4 is a flowchart showing a processing procedure at a CPU of the charging and feeding device.

The charging and feeding device of this embodiment relates to a device for providing a current necessary to the load device and controlling a heat generation of the current control circuit by charging without rapidly charging the battery. As shown in FIG. 2, charging and feeding device 12 consists of battery 16, external I/O connector 18, current control field effect transistor circuit (hereinafter referred to as current control FET circuit) 20, feeding control IC circuit 22, and CPU 24. Both terminals of battery 16 are connected to load device 17. External I/O connector 18 is connected to feeding adaptor 14. Since the component elements other than feeding control IC circuit 22 and CPU 24 are the same as those described in the section of related art, the detailed description thereof will be omitted.

Feeding control IC circuit 22 detects a potential difference between the voltage monitored by external voltage monitoring circuit 26 and the voltage monitored by battery voltage monitoring circuit 28 by detection circuit 32, and sends it to CPU 24.

CPU 24 comprises current value setting table 25. Current value setting table 25 registers the load state of the device, the consumption current value and the setting current value of the device in one to one correspondence.

Further, CPU 24 always keeps track of the load state of mobile telephone 10, for example, a power OFF state, a standby state, a TV phone communication state, a talking state, and maintains load state data.

CPU 24 responds to the potential difference transferred from feeding control IC circuit 22, and from current setting table 25, reads the setting current value corresponding to the load state data showing the load state of mobile telephone 10 always kept in track thereof, and transfers the setting current value to current value setting circuit 30.

Next, the operation of this embodiment will be described with reference to FIGS. 2 to 4.

During the operation of mobile telephone 10, the voltages of the input and output of current control FET circuit 20 are monitored respectively by external voltage monitoring circuit 26 and battery voltage monitoring circuit 28.

The potential difference between the input and output of current control FET circuit 20 is detected by detection circuit 32, and is transferred to CPU 24.

CPU 24 which receives the potential difference compares it with a preset threshold value, and when the potential difference is less than the threshold value (N in S1 of FIG. 4), the processing at CPU 24 is completed.

When the potential difference exceeds the threshold value (Y in S1 of FIG. 4), CPU 24 retrieves current value setting table 25. From this retrieval, the setting current value corresponding to the load state of mobile telephone 10 recognized by the CPU 24 at that time, for example, a power OFF state, a standby state, a TV phone communication state, a talking state are acquired (S2 of FIG. 4).

As an example where the potential difference exceeds the threshold value, in case the feeding voltage from feeding adaptor 14 is 5.4 V and the battery voltage is 3.8 V, the potential difference becomes 1.6 V, and assuming that the threshold value is set at 1.7 V, though the potential difference does not exceed the threshold value, when the battery voltage becomes lower than 3.7 V, the potential difference exceeds the threshold value.

Further, though the feeding voltage from feeding adaptor 14 is not an excessive voltage, when the voltage above a specified value is fed, and moreover, the load device is in a large load state, the potential difference exceeds the threshold value.

That setting current value is transferred from CPU 24 to current value setting circuit 30 (S3 of FIG. 4). Current value setting circuit 30 controls the duty of on/off of the switch of current control FET circuit 20 so as to meet the received setting current value, thereby performing the charging of the battery 16 while feeding to load device 17.

For example, when mobile telephone 10 is put into a talking state having a large load from a standby state, the voltage of battery 16 instantaneously drops, and therefore, the difference (potential difference) between the voltage detected by external voltage monitoring circuit 26 and the voltage detected by battery voltage monitoring circuit 28 ends up exceeding the preset threshold value. In this case, the preset threshold value plays a role as a threshold value for narrowing down the charging current.

The threshold value is a value arbitrarily selected between respective potential differences in the case of a full charging and an empty charging of battery 16.

Feeding control IC circuit 22 transfers the potential difference to CPU 24. CPU 24 which receives the potential difference retrieves current value setting table 25 with the [talking state] of mobile telephone 10 recognized by CPU 24 at that time, and performs a setting of the setting current value decided according to the [talking state], for example, a setting of 400 mA to current value setting circuit 30.

Current value setting circuit 30 controls the duty of on/off of the switch of current control FET circuit 20 so as to meet the set charging current of 400 mA, and performs the charging to battery 16, while feeding to the load device.

In this way, the current flowing to current control FET circuit 20 can manage with 400 mA instead of being charged with 600 mA, according to the conventional system, and the thermal loss of current control FET circuit 20 is lowered with a result that the heating temperature can be also controlled.

At the same time, since the consumption current of the [talking state] of mobile telephone 10 is 350 mA, there is no outflow current from battery 16, but on the contrary, the current flows into battery 16, and the charging of battery 16 can be slowly performed.

Being different from the above situation, in case the mobile telephone is in a small load state such as a power OFF state and a [standby state], the voltage of battery 16 is often raised, and therefore, the difference (potential difference) of the voltage detected by external voltage monitoring circuit 26 and the voltage detected by battery voltage monitoring circuit 28 is unable to exceed a preset threshold value in the above described load state unless battery 16 is exchanged. In this case, the preset threshold value plays a role as the threshold value for not narrowing down the charging current.

In this case also, the potential difference is transferred to CPU 24 from detection circuit 32. CPU 24 compares the potential difference and the threshold value (S1 of FIG. 4), and when the potential difference does not exceed the threshold value (N in S1 of FIG. 4), the processing at CPU 24 is completed.

When exceeding (Y in S1 of FIG. 4), current value setting table 25 is retrieved with a [power OFF state] or a [standby state] of mobile telephone 10 recognized by CPU 24 at that time, and a setting of the setting current value decided according to the [power OFF state] or the [standby state], for example, a setting of 600 mA is performed to current value setting circuit 30.

Current value setting circuit 30 controls the duty of on/off of the switch of current control FET circuit 20 so as to become a set charging current of 600 mA, thereby charging battery 16 while feeding to the load device.

Thus, in case mobile telephone 10 is in the [power OFF state] or the [standby state], even when the current of 600 mA is conducted to current control FET circuit 20, since the potential difference between the input and output of current control FET circuit 20 is small as described above, the thermal loss at current control FET circuit 20 is small, and hence, the temperature rise is small.

Thus, according to the constitution of this present embodiment, when the potential difference between the input and output of the current control FET circuit exceeds the preset threshold value, since a relatively small current decided according to the load state of the mobile telephone is allowed to be conducted to the current control FET circuit, the thermal loss of the current control FET circuit can be controlled, and consequently, the temperature rise of the mobile telephone can be controlled.

In the mobile telephone which is applied to the ears and kept close to the face by the user, not only a feeling of discomfort while in use can be removed, but also a risk of low temperature heat injury can be prevented.

Further, since the charging current set as described above is a relative small value which is capable of feeding the charging current to the load device, while charging the battery also, there is no loss current from the battery, and the battery can be kept in a charged state without causing troubles to the operation of the mobile telephone, and the occurrence of the feeding state obstructing the normal operation of the mobile telephone as heretofore can be prevented.

### (Second Embodiment)

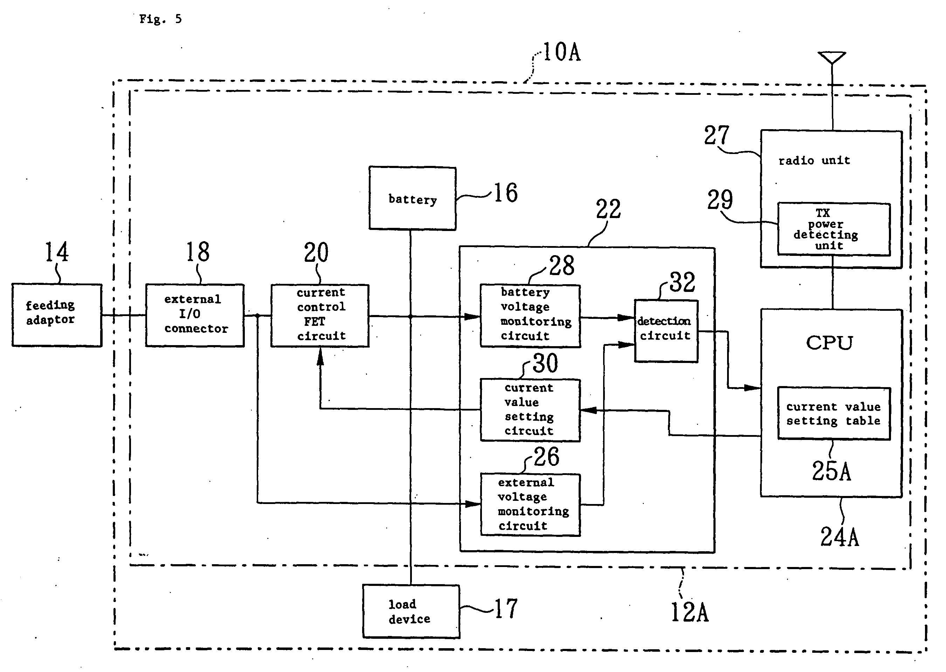

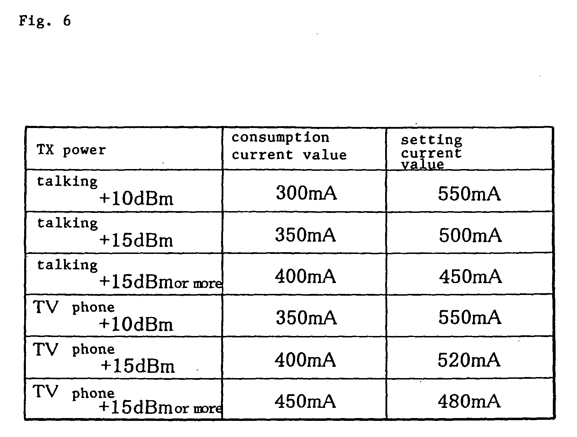

FIG. 5 is a schematic block diagram of a charging and feeding device which is a second embodiment of this invention, and further, FIG. 6 is a current value setting table used in the charging and feeding device.

The constitution of this embodiment is different in a large way from the first embodiment in that the current conducted to a current control FET circuit is set such that it can match a transmitting power during communication.

That is, charging and feeding device 12A of mobile telephone 10A is constituted in such a way as to decide a current to be conducted to current control FET circuit 20 depending on with how much transmitting power the mobile telephone is in the midst of communication when CPU 24A receives a potential difference from detection circuit 32.

Hence, CPU 24A keeps track of how much dBm the transmitting power has in the midst of communication always monitored by transmitting power detecting unit 29 (FIG. 5) of radio transmission unit 27, and maintains a load state data thereof. Further, CPU 24A has current value setting table 25A registered with the consumption current and setting current value of the mobile telephone retrievable by the transmitting power (load state data) in the midst of communication.

For the elements of this embodiment I which are the same as those of the first embodiment, the same reference numerals and characters will be attached to the same elements, and the detailed description thereof will be omitted.

Next, the operation of this embodiment will be described with reference to FIGS. 5 and 6.

While mobile telephone 10A is in the midst of communication, the voltages of the input and the output of current control FET circuit 20 are monitored respectively by external voltage monitoring circuit 26 and battery voltage monitoring circuit 28. Further, the transmitting power is detected by transmitting power detection unit 29 of radio transmission unit 27, and the transmitting power is always monitored by CPU 24A.

In general, the transmitting power of radio transmission unit 27 becomes greater as the distance with a base station becomes longer, and becomes smaller as the distance becomes shorter.

The potential difference between the input and output of current control FET circuit 20 is outputted from detection circuit 32 which receives the external voltage from external voltage monitoring circuit 26 and the battery voltage of battery voltage monitoring circuit 28. The potential difference is transferred to CPU 24A from detection circuit 32.

CPU 24A which receives the potential difference compares the potential difference and a preset threshold value (same as S1 of FIG. 4), and when the potential difference does not exceed the threshold value, the processing of CPU 24A is completed (same as N in S1 of FIG. 4).

When the potential exceeds the threshold value (Y in S1 of FIG. 4), CPU 24A reads current value setting table 25A (same as S2 of FIG. 4) with the transmitting power of radio transmission unit 27 recognized by CPU 24A at that time, for example, as shown in FIG. 6, in which the transmitting power of the [talking state] is equal to or more than + 10 dBm, + 15 dBm, and + 15 dBm and the transmitting power of the [TV phone communication state] is above + 10 dBm, + 15 dBm and above + 15 dBm, and sets the read setting current value to current value setting circuit 30.

Current value setting circuit 30 controls the duty of on/off of the switch of current control FET circuit 20 so as to meet the set setting current value, thereby charging battery 16, while feeding a load device.

In this way, for example, when the transmitting power in the midst of communication is + 10 dBm, the current flowing to current control FET circuit 20 is 550 mA, while the consumption current in the [talking state] of mobile telephone 10 is 300 mA, and therefore, the current flows into battery 16, and a thermal loss at current control FET circuit 20 is lowered.

Further, this holds true with other transmitting powers.

In this way, according to this embodiment, the current flowing into the current control FET circuit can be set to a value smaller than the current at the above described rapid charging, and moreover, since that current value is a value larger than the consumption current of mobile telephone 10 at the setting time, the thermal loss at the current control FET circuit can be lowered, and a slow charging of the battery can be also performed.

Consequently, the same advantage as that of the first embodiment can be acquired.

### (Third Embodiment)

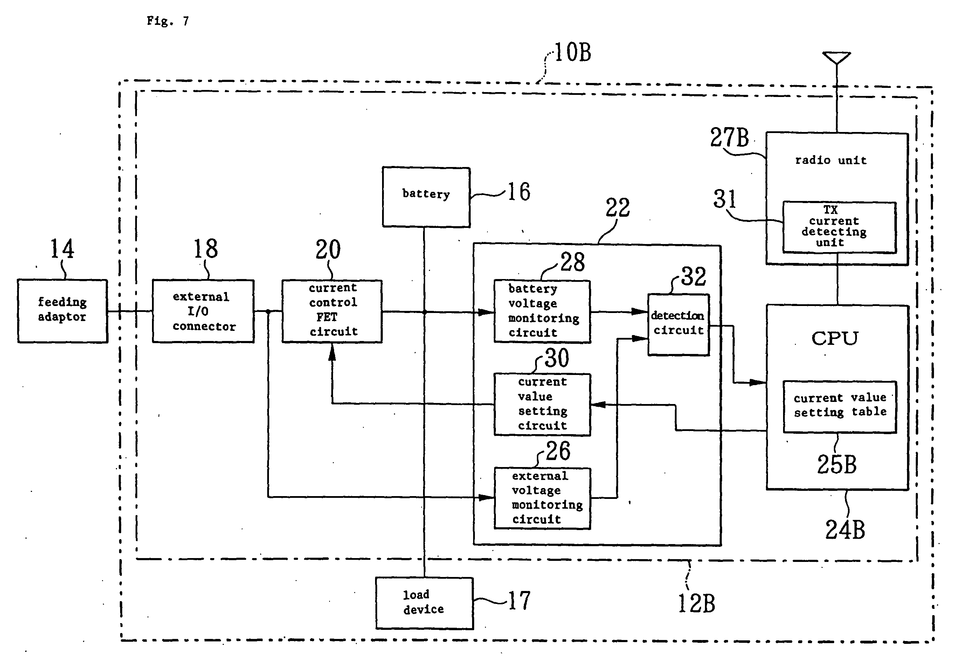

FIG. 7 is a schematic block diagram of a charging and feeding device which is a third embodiment of this invention. The constitution of this embodiment is different in a large way from the first embodiment in that the setting of a charging current is performed by matching to the transmitting power in the midst of communication.

That is, charging and feeding device 12B of mobile telephone 10B is constituted in such a way as to decide a current to be conducted to current control FET circuit 20 depending on with how much transmitting power the mobile telephone is in the midst of communication when CPU 24B receives a potential difference from charging control IC circuit 22.

Hence, CPU 24B always monitors a transmitting current in the midst of communication by transmitting current detection unit 31 (FIG. 7) of radio transmission unit 27B, and keeps track of how much mA the transmitting current in the midst of communication has, and maintains a load state data thereof.

Further, CPU 24B has current value setting table 25B registered with the setting current value of the mobile telephone retrievable with the transmitting current (load state data) in the midst of communication.

For the elements of this embodiment which are the same as those of the first embodiment, the same reference numerals and characters will be attached to the same elements, and the detailed description thereof will be omitted.

Next, the operation of this embodiment will be described with reference to FIG. 7.

While the mobile telephone 10B is in the midst of communication, the voltages of the input and the output of current control FET circuit 20 are monitored respectively by external voltage monitoring circuit 26 and battery voltage monitoring circuit 28. Further, the transmitting current is detected by transmitting power detection unit 31 of radio transmission unit 27, and the transmitting current is always monitored by CPU 24B.

Respective voltages monitored by external voltage monitoring circuit 26 and battery voltage monitoring circuit 28 are supplied to detection circuit 32, and the potential difference between the input and output of current control FET circuit 20 is outputted from detection circuit 32, and is transferred to CPU 24B.

CPU 24B which receives the potential difference, similarly to the first and second embodiments, compares the potential difference and a threshold value (same as S1 of FIG. 4). When the potential difference does not exceed the threshold value, the processing is completed.

When the potential difference exceeds the threshold value, CPU 24B retrieves current value setting table 25, and reads the setting current value (same as S2 of FIG. 4), and transfers the setting current value to current value setting circuit 30 (same as S3 of FIG. 4), and sets it to current value setting circuit 30.

Current value setting circuit 30 controls the duty of on/off of the switch of current control FET circuit 20 so as to become the set setting current value, thereby performing the charging of battery 16 while feeding load device 17.

In this way, similarly to the first and second embodiments, since the current flowing into current control FET circuit 20 is a value smaller than the current at the above described rapid charging and, moreover, is a value larger than the consumption current of mobile telephone 10B, the current flows into battery 16, and a thermal loss of current control FET circuit 20 is lowered.

In this way, according to this embodiment, the current flowing into the current control FET circuit can be set to a value smaller than the current at the above described rapid charging, and moreover, since that current value is a value larger than the consumption current of the mobile telephone at the setting time, a thermal loss at the current control FET circuit can be lowered, and a slow charging of the battery can be also performed.

Consequently, the same advantages as those of the first and second embodiments can be acquired.

### (Fourth Embodiment)

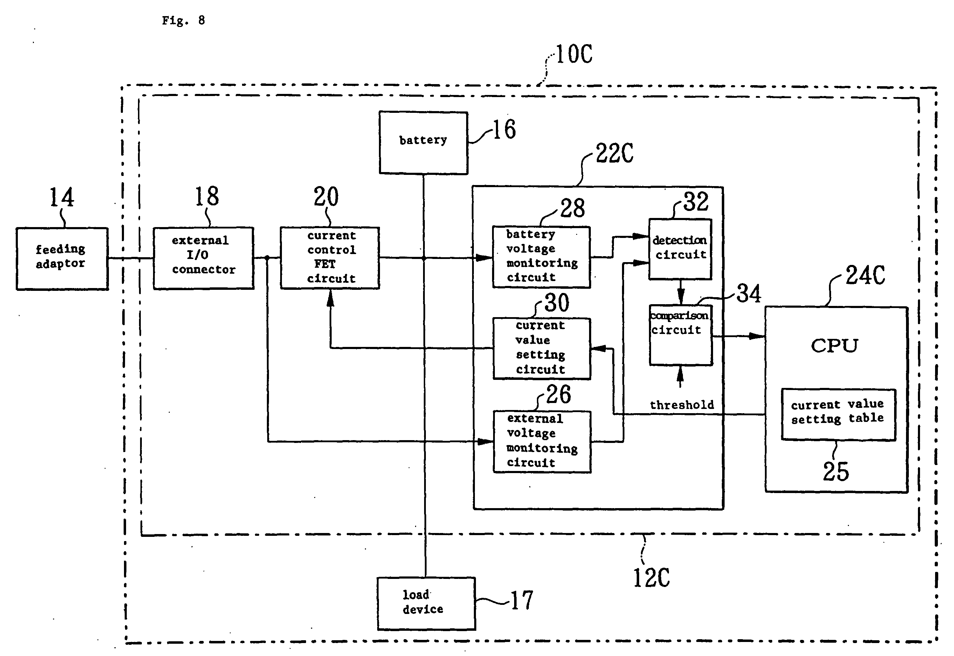

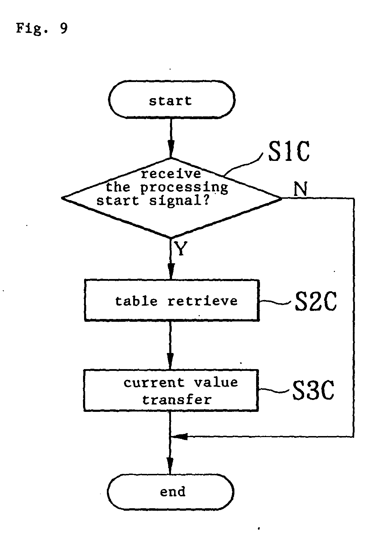

FIG. 8 is a schematic block diagram of a charging and feeding device which is a fourth embodiment of this invention, and FIG. 9 is a flowchart showing a processing procedure at a CPU of the charging and feeding device.

The constitution of this embodiment is different in a large way from the first embodiment in that a comparing processing between a potential difference and a threshold value is performed in a feeding control IC circuit.

That is, charging and feeding device 12C of mobile telephone 10C is constituted such that comparison circuit 34 is connected to a detection circuit 32 of a feeding control IC circuit 22C, and a CPU 24C which receives a processing start signal from the comparison circuit 34 sets a setting current value acquired by retrieving current value setting table 25 to current value setting circuit 30.

Hence, as shown in FIG. 9, upon receipt of a processing start signal, the processing at CPU 24C immediately performs the retrieval of current value setting table 25 and the transfer of the setting current value to current value setting circuit 30.

For the elements of this embodiment which are the same as those of the first embodiment, the same reference numerals will be attached to the same elements, and the detailed description thereof will be omitted.

Next, the operation of this embodiment will be described with reference to FIGS. 8 and 9.

While mobile telephone 10C is in the midst of communication, the voltages of the input and the output of current control FET circuit 20 are monitored by external voltage monitoring circuit 26 and battery voltage monitoring circuit 28.

The potential difference between the input and output of current control FET circuit 20 is outputted from detection circuit 32 which receives the external voltage from external voltage monitoring circuit 26 and the battery voltage of battery voltage monitoring circuit 28. That potential difference is compared to a threshold value at comparison circuit 34, and the processing start signal is outputted from comparison circuit 34. The processing start signal is transferred from comparison circuit 34 to CPU24C.

When CPU 24C does not receive the processing start signal (N in S1C of FIG. 9), the processing of CPU 24C is completed.

When receiving the processing start signal (Y in S1 C of FIG. 9), CPU 24C reads current value setting table 25 with the load state (load state data) of mobile telephone 10C recognized by CPU 24C at that time (S2C of FIG. 9) (same as S2 of FIG. 4), and the read setting current value is set to current value setting circuit 30.

Current value setting circuit 30 controls the duty of on/off of the switch of current control FET circuit 20 so as to meet a set setting current value, thereby charging battery 16 while feeding to a load device.

In this way, similarly to the first embodiment, since the current flowing into current control FET circuit 20 is a value smaller than the current at the above described rapid charging and, moreover, is a value larger than the consumption current of mobile telephone 10C, battery 16 is charged, and a thermal loss of current control FET circuit 20 is lowered.

In this way, according to this embodiment, the current flowing into the current control FET circuit can be set to a value smaller than the current at the above described rapid charging, and moreover, since that current value is a value larger than the consumption current of the mobile telephone at the setting time, the thermal loss at the current control FET circuit can be lowered, and a slow charging of the battery can be also performed.

Consequently, the same advantage as that of the first embodiment can be acquired.

### (Fifth Embodiment)

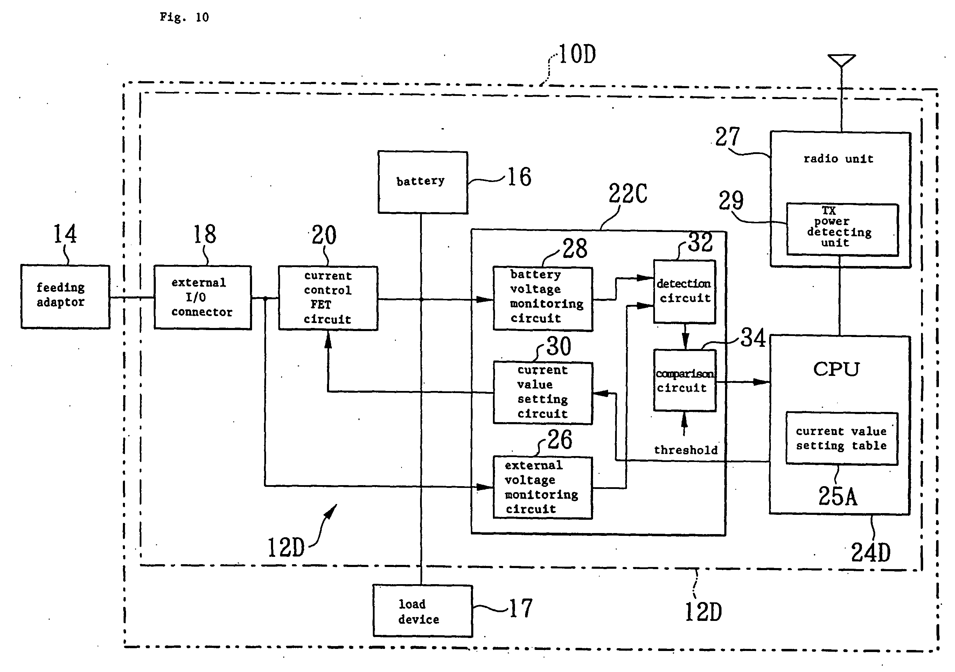

FIG. 10 is a schematic block diagram of a charging and feeding device which is a fifth embodiment of this invention.

The constitution of this embodiment is different in a large way from the second embodiment in that a comparison processing between a potential difference and a threshold value is performed in a feeding control IC circuit.

That is, charging and feeding device 12D of mobile telephone 10D which is this embodiment is constituted such that comparison circuit 34 is connected to detection circuit 32 of feeding control IC circuit 22C, and CPU 24D which receives a processing start signal from comparison circuit 34 sets a setting current value acquired by retrieving current value setting table 25A to current value setting circuit 30.

Hence, upon receipt of a processing start signal, the processing at CPU 24C immediately performs the retrieval of current value setting table 25A and the transfer of the setting current value to current value setting circuit 30 (same as FIG. 9).

For the elements of this embodiment which are the same as those of the first embodiment, the same reference numerals will be attached to the same elements, and the detailed description thereof will be omitted.

Next, the operation of this embodiment will be described with reference to FIG. 10.

While mobile telephone 10D is in the midst of communication, the voltages of the input and the output of current control FET circuit 20 are monitored by external voltage monitoring circuit 26 and battery voltage monitoring circuit 28.

The potential difference between the input and output of current control FET circuit 20 is outputted from detection circuit 32 which receives the external voltage from external voltage monitoring circuit 26 and the battery voltage of battery voltage monitoring circuit 28. That potential difference is compared to a threshold value at comparison circuit 34, and the processing start signal is transferred from comparison circuit 34 to CPU 24D.

When CPU 24D does not receive the processing start signal (same as N in S1C of FIG. 9), the processing of CPU 24D is completed.

When receiving the processing start signal (same as Y of S1C of FIG. 9), CPU 24D reads current value setting table 25A with a transmitting power (load state data) of mobile telephone 10D recognized by CPU 24D at that time (same as S2C of FIG. 9) (same as S2 of FIG. 4), and the read setting current value is set to current value setting circuit 30.

Current value setting circuit 30 controls the duty of on/off of the switch of current control FET circuit 20 so as to meet the set setting current value, thereby charging battery 16, while feeding a load device.

In this way, similarly to the second embodiment, since the current flowing into current control FET circuit 20 is a value smaller than the current at the above described rapid charging and, moreover, is a value larger than the consumption current of mobile telephone 10D, battery 16 is charged, and a thermal loss of current control FET circuit 20 is lowered.

In this way, according to this embodiment, the current flowing into the current control FET circuit can be set to a value smaller than the current at the above described rapid charging, and moreover, since that current value is a value larger than the consumption current of the mobile telephone at the setting time, the thermal loss at the current control FET circuit can be lowered, and a slow charging of the battery can be also performed.

Consequently, the same advantage as that of the second embodiment can be acquired.

### (Sixth Embodiment)

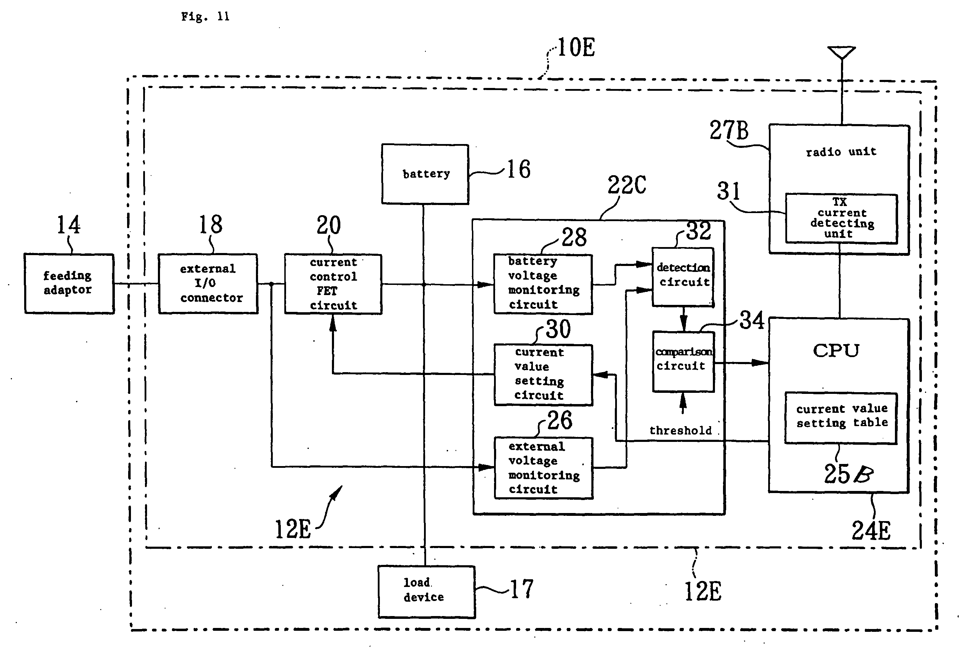

FIG. 11 is a schematic block diagram of a charging and feeding device which is a sixth embodiment of this invention.

The constitution of this embodiment is different in a large way from the third embodiment in that a comparison processing between a potential difference and a threshold value is performed in a feeding control IC circuit.

That is, charging and feeding device 12E of mobile telephone 10E which is this embodiment is constituted such that comparison circuit 34 is connected to detection circuit 32 of feeding control IC circuit 22C, and CPU 24E which receives a processing start signal from comparison circuit 34 sets a setting current value acquired by retrieving current value setting table 25B to current value setting circuit 30.

Hence, upon receipt of a processing start signal, the processing at CPU 24E immediately performs the retrieval of current value setting table 25B and the transfer of the setting current value to current value setting circuit 30 (same as FIG. 9).

For the elements of this embodiment which are the same as those of the third embodiment, the same reference numerals will be attached to the same elements, and the detailed description thereof will be omitted.

Next, the operation of this embodiment will be described with reference to FIG. 11.

While the mobile telephone 10E is in the midst of communication, the voltages of the input and the output of current control FET circuit 20 are monitored respectively by external voltage monitoring circuit 26 and battery voltage monitoring circuit 28.

The potential difference between the input and output of current control FET circuit 20 is outputted from detection circuit 32 which receives the external voltage from external voltage monitoring circuit 26 and the battery voltage of battery voltage monitoring circuit 28. That potential difference is compared to a threshold value at comparison circuit 34, and a processing start signal is outputted from comparison circuit 34. The processing start signal is transferred from comparison circuit 34 to CPU 24E.

When CPU 24E does not receive the processing start signal (same as N in S1C of FIG. 9), the processing of CPU 24E is completed.

When receiving the processing start signal (same as Y in S1C of FIG. 9), CPU 24E reads current value setting table 25B with a transmitting current (load state data) of mobile telephone 10E recognized by CPU 24E at that time (same as S2C of FIG. 9)(same as S2 of FIG. 4), and the read setting current value is set to current value setting circuit 30.

Current value setting circuit 30 controls the duty of on/off of the switch of current control FET circuit 20 so as to meet the set setting current value, thereby charging battery 16, while feeding load device 17.

In this way, similarly to the third embodiment, since the current flowing into current control FET circuit 20 is a value smaller than the current at the above described rapid charging and, moreover, is a value larger than the consumption current of mobile telephone 10E, a battery 16 is charged, and a thermal loss of current control FET circuit 20 is lowered.

In this way, according to this embodiment, the current flowing into the current control FET circuit can be set to a value smaller than the current at the above described rapid charging, and moreover, since that current value is a value larger than the consumption current of the mobile telephone at the setting time, the thermal loss at the current control FET circuit can be lowered, and a slow charging of the battery can be also performed.

Consequently, the same advantage as that of the third embodiment can be acquired.

While the embodiment of this invention has been described in detail with reference to the drawings, the specific constitution of this invention is not limited to these embodiments, and even when there are modifications and the like in design without departing from the spirit of this invention, those modifications and the like are included in this invention.

For example, in addition to the mobile telephone, even in portable information terminal unit and the like built-in charging and feeding device, this invention is equally executable.

Further, by using other factors that are a reference to show how much the charging amount is available and are equally usable with the above described potential difference, for example, the voltage and discharging amount of the battery in addition to the potential difference between the input and output of the charging control FET circuit, the transfer of those factors or the generation of the above described processing start signal may be performed.

Further, by using an relational expression showing a relation between the load state data and the current value instead of the above described current value setting table, the current value may be acquired or a programmable logical array taking an input as a load state and an output as a direct current value may be used.

Further, in the first and fourth embodiments, though the waiting call state, the TV phone communication state, and the talking state have been illustrated as the load states of the mobile telephone, same can be said of, for example, an internet communication state, a transmission and reception state of mails, a mail text preparation state, a download state of software, a software activating state, and a combination of an internet communication and speaking, a TV phone call, and mails and games.

Further, in the second, third, fifth and sixth embodiments, though an example is shown where, in case the potential difference between the external voltage and the battery voltage exceeds the threshold value, by making sure of which range the data showing the magnitude of the transmitting power or the transmitting current at that time is located, the current value setting table is retrieved, but without determining whether or not the potential difference exceeds the threshold value, the transmitting current only is monitored, and for example, when the transmitting power of the talking state is +10 dBm, the current of the current control FET circuit may be changed to 650 mA, and when equal to or more than + 15 dBm, the current may be changed to 450 mA, and executed.

While preferred embodiments of the present invention have been described using specific terms, such description is for illustrative purpose only, and it is to be understood that changes and variations may be made without departing from the spirit or scope of the following claims.

## Claims

1. A charging and feeding control method for charging a load device, while charging a battery from a direct current power supply through a current control circuit, said method comprising the steps of:
monitoring a present load state of said load device, and
controlling a current value supplied from said direct current power supply through said current control circuit based on the acquired present load state.

2. The charging and feeding control method according to claim 1, wherein a current value setting table taking said present load state data as a variable is prepared, and said current value is controlled by referring to said current value setting table.

3. The charging and feeding control method according to claim 2, wherein said current value setting table is referred to when a potential difference between the input and output of said current control circuit exceeds a predetermined threshold value.

4. The charging and feeding control method according to claim 1, wherein said present load state data is at least any one of the data shown by a mobile telephone such as a power OFF state, a standby state, a talking state, a TV phone communication state, an internet communication state, a transmission and reception state of mails and a mail text preparation state, a down load state of software, an activating state of software, and a combination of an internet communication and talking, a TV phone, mails or

5. The charging and feeding control method according to claim 1, wherein said present load state data is data showing a transmitting power or a transmitting current of a sending unit of the mobile telephone.

6. A charging and feeding device including a battery and a current control circuit with its input connected to a direct current power supply and its output connected to a battery and a load device, comprising:
a monitoring means for monitoring the present load state of said load device; and
a current control means for controlling a current value supplied from said direct current power supply through said current control circuit based on the present load state data acquired by the monitoring means.

7. The charging and feeding device according to claim 6, wherein said current control means comprises a current value setting table taking said present load state data as a variable, and controls said current value by referring to said current value setting table.

8. The charging and feeding device according to claim 6, wherein said present load state data acquired by said monitoring means is at least any one of the data shown by a mobile telephone such as a power OFF state, a standby state, a talking state, a TV phone communication state, an internet communication state, a transmission and reception state of mails and a mail text preparation state, a down load state of software, an activating state of software, and a combination of an internet communication and talking, a TV phone, mails or games.

9. The charging and feeding device according to claim 6, wherein said present load state data acquired by said monitoring means is a data showing a transmitting power or a transmitting current of a sending unit of the mobile telephone.

10. The charging and feeding device according to claim 6, wherein, when an electrically measurable value decided according to the charged state of said battery exceeds a predetermined threshold value or is below the threshold value, a control by said current control means is performed.

11. The charging and feeding device according to claim 10, wherein the electrically measurable value decided according to the charged state of said battery is a potential difference between the input and output of said current control circuit, and when the potential difference exceeds the predetermined threshold value, the control by said current control means is performed.

12. The charging and feeding device according to claim 10, wherein the electrically measurable value decided according to the charged state of said battery is a voltage of said battery, and when the voltage becomes below the predetermined threshold value, the control by said current control means is performed.

13. The charging and feeding device according to claim 7, wherein said current control means includes:
a potential difference detection circuit comprising a first circuit for monitoring the voltage of the input terminal of said current control circuit; a second circuit for monitoring the voltage of the output terminal of said current control circuit; and a third circuit for detecting said potential difference based on the voltage monitored by said first circuit and the voltage monitored by said second circuit; and
an information processing means for determined whether or not the potential difference outputted from the potential difference detection circuit exceeds a predetermined threshold value, and outputting said current value by referring to said current value setting table when said potential difference exceeds said threshold value.

14. The charging and feeding device according to claim 7, wherein said current control means, includes:
a processing condition detection circuit comprising a first circuit for monitoring the voltage of the input terminal of said current control circuit; a second circuit for monitoring the voltage of the output terminal of said current control circuit; a third circuit for detecting said potential difference based on the voltage monitored by said first circuit and the voltage monitored by said second circuit; and a comparison circuit for comparing the potential difference outputted from the third circuit and a predetermined threshold value and outputting a processing start signal; and
an information processing means for outputting said current value by referring to said current value setting table when said processing start signal is generated from the processing condition detection circuit.

15. The charging and feeding device according to claim 13, wherein said current control means comprises a current value setting circuit connected to said information processing means, and an output of the current value setting circuit is connected to a control input of said current control circuit.

16. The charging and feeding device according to claim 14, wherein said current control means comprises a current value setting circuit connected to said information processing means, and an output of the current value setting circuit is connected to a control input of said current control circuit.

17. The charging and feeding device according to claim 9, wherein said current control means controls said current value based on a data showing said transmitting power or said transmitting current of said sending unit of said mobile telephone.
